# EUROPÄISCHE PATENTSCHRIFT

(11) **EP 2 228 191 B1**
(45) Veröffentlichungstag und Bekanntmachung des Hinweises auf die Patenterteilung: **07.09.2016**
(21) Anmeldenummer: 10001830.8
(22) Anmeldetag: 23.02.2010
(51) Int. Cl.: B29C 45/14, B29C 45/26

(54) **Dichtelement zur Abdichtung elektrischer Kontaktelemente beim Spritzgießen**
Seal element for sealing electrical contact elements during injection moulding
Elément d'étanchéité destiné à étanchéifier des éléments de contact électriques lors du moulage par injection

(30) Priorität: 09.03.2009 DE 102009011731
(43) Veröffentlichungstag der Anmeldung: 15.09.2010
(73) Patentinhaber: WILO SE, 44263 Dortmund (DE)
(72) Erfinder: Zinzius, Jürgen, 44287 Dortmund (DE); Siebeking, Thomas, 58513 Lüdenscheid (DE)
(74) Vertreter: Cohausz Hannig Borkowski Wißgott

(56) Entgegenhaltungen:
- WO-A1-2005/097456
- DE-A1- 2 312 298
- DE-B1- 1 554 882
- JP-A- 2002 144 368

## Beschreibung

Die vorliegende Erfindung betrifft ein Dichtelement für eine Spritzgießmaschine zur Abdichtung zumindest eines elektrischen Kontaktelements eines Steckkontaktes beim teilweisen Umspritzen mit einer Kunststoffformmasse, eine Spritzgießmaschine zum Herstellen des das Kontaktelement umfassenden Steckkontakts eines Kunststoffformteils und ein Verfahren zur Herstellung des Steckkontaktes des Kunststoffformteils.

Es ist häufig notwendig, Kunststoffformteile mit elektrischen Steckkontakten auszubilden, die eine elektrische Schnittstelle zu anderen elektrischen Bauteilen darstellen. Beispielsweise benötigt ein in ein Gehäuse integriertes elektrisches Bauteil im Falle des Betriebs an einem Spannungsnetz stets einen elektrischen Anschluss. Dieser kann vorteilhaft direkt an dem Gehäuse als einstückig mit diesem ausgebildeter Stecker vorgesehen werden. In das üblicherweise als Kunststoff hergestellte Gehäuse werden dann elektrische Verbindungsleiter eingebettet, die beidseitig aus dem Gehäuse herausragen, wobei ein erstes freies Ende der Verbindungsleiter ein Kontaktelement des Steckers bildet und das zweite freie Ende in den Innenraum des Gehäuses ragt, wo es für das elektrische Bauteil entweder ebenfalls über eine Steckverbindung oder direkt durch Verlöten kontaktiert werden kann.

Ein Dichtelement der genannten Gattung ist aus der deutschen Patentanmeldung DE-A 2 312 298 bekannt. Dort wird vorgeschlagen, in dem Bereich dreier nebeneinander liegender Kontaktelemente, in dem eine Abdichtung gegen die flüssige Kunststoffmasse notwendig ist, einen elastischen Überzug auf die Kontaktelemente zu ziehen. Aufgrund der Elastizität des Dichtelements werden Luftspalte, die zum Einlegen der Kontaktelemente in die Spritzgießmaschine erforderlich sind, abgedichtet, wenn die Spritzgießmaschine geschlossen ist. Das Dichtelement besteht hierbei aus zwei Teilen, die ein Entfernen von den Kontaktelementen nach dem Spritzgießen ermöglichen.

Aus der internationalen Patentanmeldung WO-A 2005/097456 ist eine Spritzgießmaschine zum Umspritzen metallischer Einleger bekannt. Auch hier besteht die Maschine aus zwei Werkzeugteilen, die gemeinsam eine längliche Kavität bilden. Endseitig dieser Kavität weisen beide Werkzeugteile jeweils einen Einsatz mit einem Hohlraum auf, in dem jeweils formschlüssig ein Dichtelement einliegt. Im geöffneten Zustand der Spritzgießmaschine wird der Einleger in die Kavität einer der Werkzeughälften eingelegt, wobei er sich über die Kavität hinaus in den Hohlraum erstreckt, wo er von dem dortigen Dichtelement von drei Seiten formschlüssig umgriffen wird. Das andere Dichtelement drückt im geschlossenen Zustand der Werkzeughälften gegen die vierte Seite des Einlegers, so dass dieser vollständig zur Kavität hin abgedichtet wird.

Weiterhin ist es auch bekannt, elektrische Bauteile, beispielsweise Statoren von Elektromotoren für Pumpenanwendungszwecke vollständig mit einem Kunststoff, beispielsweise einem Thermoplast oder einem Duroplast zu umspritzen. Derartige Bauteile weisen ebenfalls elektrische Steckkontakte auf, um mit einer anderen elektrischen Komponente, zum Beispiel einer Steuerungseinheit oder einem Frequenzumrichter verbunden und bestromt werden zu können. Dabei werden metallische Leiter verwendet, beispielsweise Stanzgitter oder einzelne im Querschnitt als Rund- oder Rechteckprofil ausgebildete Verbindungsleiter, die in die Kunststoffumspritzung eingebettet werden und lediglich an einem freien Ende im Bereich des Steckkontaktes aus dem Kunststoffformteil mit einem Kontaktierbereich herausragen. Das andere Ende des Verbindungsleiters ist an das elektrische Bauteil unmittelbar oder mittelbar angeschlossen.

Zur Herstellung derartiger Kunststoffformteile werden die metallischen Verbindungsleiter zunächst in ein Spritzgießwerkzeug eingelegt und anschließend partiell umspritzt, womit sich eine Kunststoff-Metall-Verbundkonstruktion ergibt, die entsprechend der mit der Kunststoffformmasse zu füllenden Kavität des Werkzeugs beliebig komplex ausgebildet sein kann. Damit das für den Steckkontakt vorgesehene freie Ende eines Verbindungsleiters, nachfolgend Kontaktelement genannt, nicht mit Formmasse benetzt wird, muss dieses Ende aus der Kavität herausragen bzw. in einen Bereich hineinragen, in den die Formmasse nicht fließen kann.

Hierfür ist es bekannt, im Formwerkzeug einen Einsatz aus Metall oder einem thermoplastischen Kunststoff mit einer oder gemäß der Anzahl abzudichtender Kontaktelemente entsprechend mehreren Öffnungen vorzusehen, in die das jeweilige freie Ende des Verbindungsleiters formschlüssig eingesteckt werden kann und so von der Umspritzung verschont bleibt. Nachteilig ist hierbei, dass aufgrund von Toleranzen in den Abmaßen und Abständen der Kontaktelemente keine vollständige Abdichtung zwischen dem Verbindungsleiter und dem Einsatz erreicht wird, so dass sich Freiräume bilden. Bei dünnflüssigen und leichtfließenden Formmassen werden diese Freiräume gefüllt und es bildet sich ein Grad. Da dieser Grad die Oberfläche des Kontaktierbereichs und damit aufgrund der Isoliereigenschaft des Kunststoffs die elektrische Übertragungsqualität reduziert, ist es notwendig, den Grad zu entfernen. Dies führt zu zusätzlichem personellen und zeitlichen Aufwand und damit zu erhöhten Herstellungskosten. Ein weiterer Nachteil ist bei der Ausführung des Einsatzes aus Metall, dass die ebenfalls metallischen Verbindungsleiter beim Einführen in die Öffnung beschädigt oder verbogen werden könnten. Ein thermoplastischer Einsatz hat ferner den Nachteil, dass er sich unter der Temperatur und dem Druck der eingespritzten Formmasse verformen könnte und somit nicht beliebig oft verwendet werden kann.

Es ist daher Aufgabe der Erfindung, eine Möglichkeit zur Verfügung zu stellen, die Kontaktelemente eines Steckkontaktes eines Kunststoffformteiles beim partiellen Umspritzen in der Spritzgießmaschine mit einer Kunststoffformmasse derart abzudichten, dass sich keine Freiräume zwischen dem Einsatz und dem Kontaktelement bilden, so dass ein zeit-, personal- und kostenintensive Nacharbeitungsvorgang der Gradentfernung entfallen kann.

Diese Aufgabe wird durch ein Dichtelement nach Anspruch 1, eine Spritzgießmaschine nach Anspruch 10 und das Verfahren nach Anspruch 12 gelöst. Vorteilhafte Weiterbildungen der Erfindung sind in den jeweiligen Unteransprüchen genannt.

Erfindungsgemäß wird ein Dichtelement für eine Spritzgießmaschine zur Abdichtung zumindest eines elektrischen Kontaktelements eines Steckkontaktes beim teilweisen Umspritzen mit einer Kunststoffformmasse vorgeschlagen, das aus einem flexiblen Material gebildet ist und zumindest einen Schlitz aufweist, in das das Kontaktelement derart formschlüssig einführbar ist, dass es umfangsmäßig von dem Dichtelement vollständig umschlossen ist, wobei sich das Dichtelement bei Einwirkung einer Druckkraft derart elastisch verformt, dass es sich dichtend an das Kontaktelement anlegt.

Das Dichtelement ist einteilig ausgebildet. Ein derartiges Dichtelement kann in eine Spritzgießmaschine eingeführt werden und den Kontaktierbereich des zumindest einen elektrischen Kontaktelements vollständig abdichten, so dass keine Kunststoffformmasse beim Spritzgießen an dem Kontaktelement vorbeifließt. Dies wird dadurch erreicht, dass das Dichtelement aus einem flexiblen Material hergestellt wird, welches sich bei Ausübung einer Druckkraft auf das Dichtelement elastisch verformt. Die Innenwand des zumindest einen Schlitzes wird durch die Verformung allseitig gegen den Kontaktierbereich des Kontaktelements gedrückt und dichtet somit den gesamten Umfang des Kontaktelements, insbesondere zur Kavität des Spritzgießwerkzeugs hin ab. Es verbleiben keine Freiräume zwischen dem Dichtelement und dem Kontaktelement, in die etwaige Kunststoffformmasse eintreten kann und nach dem Abkühlen einen Grad bilden würde. Zeit- und arbeitsaufwändige Nachbearbeitungsschritte können dadurch entfallen und damit die Herstellungskosten des Kunststoffformteils erheblich reduziert werden. Weiterer Vorteil eines flexiblen Dichtelements ist, dass die Oberfläche des Kontaktelements, die zur Erzielung einer besseren elektrischen Leitfähigkeit gegebenenfalls besonders ausgebildet, beispielsweise vergoldet oder galvanisiert sein kann und damit empfindlich ist, nicht beschädigt wird. Das Dichtelement ist einteilig und kann nach dem Spritzgießvorgang in der Spritzgießmaschine verbleiben. Das Dichtelement bildet keinen Bestandteil des herzustellenden Steckkontakts.

Das Kontaktelement kann aus einem beliebigen elektrisch leitenden Material, Verbundmaterial, insbesondere aus einem Metall, einer Metalllegierung oder einem metallbeschichteten Material bestehen. Zur Verwendung in einem Steckkontakt weist es eine länge Form auf, die im Querschnitt rund oder rechteckig sein kann. Ein derartiges Kontaktelement kann damit als Rundstift oder Flachstecker ausgebildet sein, d.h. einen stift- oder zungenförmigen Kontaktbereich aufweisen, den es beim Spritzgießvorgang abzudichten gilt.

Je nach Ausbildung des zumindest einen Kontaktelements kann das Dichtelement an die Form des Kontaktelements angepasst sein. Bei Verwendung eines flachen Kontaktelements kann es genügen, das Dichtelement mit einem Schlitz in Form eines Einschnitts zu versehen, in den das Kontaktelement eingeschoben wird und der sich durch das Einschieben aufweitet. Der Schlitz wird dann von zwei sich gegenüberliegenden Lippen gebildet, die an den beiden breiten Kontaktflächen des Kontaktelements anliegen. Da die Lippen bei einem derartigen Schlitz im entspannten Zustand des Dichtelements bereits aneinander anliegen, bringt das Dichtelement dem Kontaktelement beim Einschieben eine gewisse Gegenkraft entgegen, da das Kontaktelement gummielastisches Material des Dichtelements in Höhe seines Volumens verdrängen muss. Die Rückstellkraft bewirkt dabei bereits eine erste Dichtwirkung zwischen Kontaktelement und Dichtelement. Aufgrund der Oberflächenadhäsion des flexiblen Dichtelements bringt dieses dem Kontaktelement ferner eine Reibkraft beim Einschieben in den Schlitz, d.h. beim planparallelen Bewegen der Kontaktelementoberflächen zu den Lippenoberflächen entgegen. Wird das Dichtelement zur Abdichtung mehrerer Kontaktelemente verwendet, die parallel zueinander beispielsweise in einer oder zwei Reihen angeordnet sind, führt diese zu überwindende Reibkraft zu erhöhtem Kraftaufwand. Dieser Kraftaufwand ist umso höhe, je dicker das Kontaktelement ausgebildet ist.

Es kann daher erfindungsgemäß vorgesehen sein, den zumindest einen Schlitz als Ausnehmung auszubilden. Dies bedeutet, dass Material des Dichtelements zur Aufnahme des Kontaktelements entfernt ist. Der Querschnitt der Ausnehmung ist dabei an den Querschnitt des elektrischen Kontaktelements angepasst, insbesondere zur Ausbildung einer formschlüssigen Aufnahme des Kontaktelements in dem Dichtelement, so dass das Kontaktelement im zusammengesetzten Zustand an der Innenseite der Ausnehmung vollständig anliegt. Der Formschluss oder Reibschluss eines in den Schlitz eingebrachten Kontaktelements hat den Vorteil, dass das Kontaktelement in dem Dichtelement gehalten wird und kein zusätzliches Haltemittel notwendig ist, um das Kontaktelement in Bezug zur Kavität in Position zu halten.

Alternativ kann die Ausnehmung in ihrem Querschnitt eine geringfügig größere Abmessung aufweisen als die äußere Abmessung des Kontaktelements. Dies hat den Vorteil, dass das Kontaktelement ohne Kraftaufwand in das Dichtelement eingebracht werden kann. Zwar ergibt sich dadurch ein geringer Freiraum zwischen der Innenwand der Ausnehmung und dem Kontaktelement, beispielsweise in Höhe weniger Zehntelmillimeter, jedoch sich kann das Dichtelement bei Wahl eines ausreichend elastischen Materials und unter Einwirkung einer Druckkraft ausreichend elastisch verformen, so dass es sich dichtend an das Kontaktelement anlegt und die Freiräume verschließt. Der sich zunächst ergebende Freiraum hat den zusätzlichen Vorteil, dass bei der Abdichtung mehrerer, in einer Reihe angeordneter Kontaktelemente Toleranzen in ihren Abständen ausgeglichen werden können.

Das Dichtelement kann vorzugsweise aus einem Elastomer, insbesondere einem Silikon, gebildet sein. Das Elastomer stellt ein gummielastisches Material dar, welches durch seine elastische Verformung bei Druckausübung hervorragende Abdichtwirkung aufweist. Es kann weich ausgebildet sein, was zu einer besonders hohen Dichtwirkung führt, aber auch hart ausgebildet sein, so dass der Verschleiß des Dichtelements in Folge scharfkantiger Kontaktelemente gering ist. Eine bevorzugte Materialwahl ist ein mittelmäßig weiches, bzw. hartes Elastomer, welches beide Vorteile kompromissgemäß verbindet. Ein Silikon hat den Vorteil, dass es aufgrund seiner glatten Oberfläche nicht an dem Gießmaterial haftet, welches an der Einführseite des Dichtelements mit diesem in Berührung kommt. Dies ermöglicht es, das Dichtelement - im Rahmen des mechanischen Verschleißes durch scharfe Kanten des Kontaktelements- beliebig oft wiederzuverwenden, so dass es dauerhaft in der Spritzgießmaschine verbleiben kann.

Das Dichtelement kann im Querschnitt im Wesentlichen quaderförmig ausgebildet sein. Es bildet damit ein Bauteil, das besonders einfach in eine Spritzgießmaschine, insbesondere in einen für das Dichtelement vorgesehen Hohlraum, eingesetzt werden kann.

Die Ausnehmung und/ oder der Einschnitt kann sich in Einführrichtung des Kontaktelements entlang der gesamten Dicke des Dichtelements erstrecken. Dies bedeutet, dass der Schlitz in dem Dichtelement durchgehend ist. Ein derartiges Dichtelement kann zum einen einfacher hergestellt werden als ein Dichtelement, in welchem sich der Schlitz nur teilweise in Richtung der Dicke erstreckt. Zum anderen kann das Dichtelement von beiden Stirnseiten, die die Schlitzöffnung aufweisen, auf das Kontaktelement geschoben werden, soweit keine Vorzugsorientierung notwendig ist. Dies vereinfacht die Handhabung und ermöglicht es, das Dichtelement weiter zu benutzen, wenn die erste Stirnseite in Folge intensiver Benutzung verschlissen ist. Ein weiterer Vorteil eines durchgehenden Schlitzes ist, dass das Dichtelement keine axialen Kräfte auf das Kontaktelement ausübt und das Kontaktelement damit nicht wieder aus dem Dichtelement herausgeschoben wird. Bei Druckbeaufschlagung der Stirnseite des Dichtelements wird auf das Kontaktelement lediglich eine radial zu diesem wirkende Kraft aufgebracht.

In Einführrichtung sollte das Dichtelement eine Dicke aufweisen, die größer ist als die axiale Länge des Kontaktierbereichs des Kontaktelements. Dies gewährleistet, dass bei Ausübung einer Druckkraft auf die dem Einführende abgewandte Stirnseite des Dichtelements und der damit verbundenen Verdrängung von Dichtmaterial keine Beschädigung des Kontakteelements erfolgt. Das Dichtelement kann vorzugsweise eine Dicke zwischen 8 und 20 Millimeter betragen.

Weiterhin kann das Dichtelement senkrecht zur Einführrichtung eine Breite zwischen 8 und 12 Millimeter aufweisen. In Kombination mit einer Dicke zwischen 8 und 20 Millimeter wird dadurch gewährleitet, dass genügend Dichtmaterial vorhanden ist, damit das Dichtelement eine ausreichende Rückstellkraft aufbringen kann.

Das vorzugsweise im Wesentlichen quaderförmige Dichtelement kann weiterhin vorzugsweise zumindest eine zur Einführrichtung parallele Seitenkante aufweisen, die gegenüber den anderen Seitenkanten anders geformt ist. Damit wird eine Vorzugsrichtung definiert, gemäß derer das Dichtelement in die Spritzgießmaschine einzusetzen ist. Beispielsweise kann eine oder können drei der Seitenkanten abgerundet sein, wohingegen die andere oder die anderen Seitenkanten einen ausgefüllten rechten Winkel bilden.

Da ein Steckkontakt regelmäßig mehr als ein elektrisches Kontaktelement aufweist, kann das Dichtelement dafür vorgesehen sein, mehrere elektrische Kontaktelemente beim Spritzgießvorgang abzudichten. Hierzu kann es mehrere Schlitze, d.h. Einschnitte und/ oder Ausnehmungen aufweisen, die parallel zueinander ausgerichtet sind.

Erfindungsgemäß wird weiterhin eine Spritzgießmaschine zur Herstellung von Kunststoffformteilen mit zumindest einem von einer Kunststoffformmasse teilweise zu umspritzenden elektrischen Kontaktelement eines Steckkontakts vorgeschlagen, mit einem Einsatz eines ersten Werkzeugteils, der einen Hohlraum aufweist, in den das erfindungsgemäße flexible Dichtelement mit zumindest einem Schlitz einsetzbar ist, wobei der Einsatz eine Wand aufweist, die den Hohlraum von einer Kavität trennt, in die die Kunststoffmasse einspritzbar ist, wobei die Wand zumindest eine Öffnung zur Durchführung des elektrischen Kontaktes aufweist, die auf den Schlitz des Dichtelements ausgerichtet ist, und mit einem Druckstück, das im eingesetzten Zustand des Dichtelements an diesem anliegt, wobei das Spritzgießwerkzeug zumindest während des Spritzgießbetriebs eine Druckkraft auf das Druckstück ausübt. Durch das Anliegen des Druckstücks an dem Dichtelement wird die Druckkraft auf das Dichtelement übertragen. Da es flexibel ausgebildet ist, wird es elastisch verformt. Dies bewirkt wiederum, dass das Dichtelement an die Trennwand gedrückt wird und dort im Bereich der Öffnung ein eingeführtes Kontaktelement zur Kavität hin abdichtet, so dass keine Kunststoffformasse aus der Kavität entlang des Kontaktelements fließen kann und eine Gradbildung so verhindert wird.

Das Druckstück kann eine Druckplatte sein, die an der der Kavität abgewandten Stirnseite des Dichtelements anliegen kann. Auf diese Weise wird eine gleichmäßige Kraft auf das Dichtelement ausgeübt, so dass ein gleichmäßiges Anliegen des Dichtelements am Umfang des Kontaktelements erreicht wird.

Erfindungsgemäß wird weiterhin ein Verfahren zur Herstellung eines Steckkontakts bei einem Kunststoffformteil durch teilweises Umspritzen zumindest eines elektrischen Kontaktelements mit einer Kunststoffformmasse vorgeschlagen, umfassend die Schritte
- Einsetzen eines erfindungsgemäßen flexiblen Dichtelements mit zumindest einem Schlitz in einen Hohlraum eines Einsatzes eines erfindungsgemäßen Spritzgießwerkzeugs,
- Einführen des zumindest einen Kontaktelements in den Schlitz derart, dass es umfangsmäßig von dem Dichtelement vollständig umschlossen ist,
- Schließen des Spritzgießwerkzeugs unter Ausbildung einer Kavität,
- Einspritzen der Kunststoffformmasse in die Kavität unter gleichzeitiger Ausübung einer Druckkraft auf das Dichtelement derart, dass das Dichtelement an das Kontaktelement angepresst wird und das Kontaktelement zur Kavität hin vollständig abdichtet,
- Öffnen des Spritzgießwerkzeugs,
- Entformen des Kunststoffformteils.

Die Druckkraft kann vorzugsweise auf der der Kavität abgewandten Stirnseite des Dichtelements ausgeübt werden, so dass das Dichtelement auf die Trennwand gedrückt wird. Durch diese Kraftausübung wird das Dichtelement derart verformt, dass im Falle eines Einschnitts als Schlitz die Lippen aufeinander gepresst werden und im Falle einer Ausnehmung die Innenwände der Ausnehmung sich nach innen in die Ausnehmung wölben. Auf diese Weise wird ein in den Schlitz eingebrachtes Kontaktelement fixiert und abgedichtet. Der auf das Kontaktelement ausgeübte Druck wirkt senkrecht zur Einführrichtung.

Besonders vorteilhaft ist es, wenn die Druckkraft durch Andrücken einer Druckplatte gegen die Stirnseite des Dichtelements ausgebübt wird. Damit wird eine gleichmäßige Druckverteilung und folglich eine gleichmäßige Abdichtung des Kontaktelements erreicht.

Vorzugsweise kann die Druckkraft durch die Schließbewegung des Spritzgießwerkszeugs, d.h. die Zusammenführung des ersten und eines zweiten die Kavität ausbildenden Werkzeugteils durch geeignete Mittel automatisch aufgebracht werden. Hierdurch erfolgt eine Fixierung und eine Abdichtung des Kontaktelements rechtzeitig vor dem Spritzgießprozess. In einer vorteilhaften Weiterbildung kann die Druckkraft mit dem Öffnen des Spritzgießwerkzeugs, d.h. dem Auseinanderfahren des ersten und des zweiten Werkzeugteils, nachlassen, so dass sich das Dichtelement entspannt und das Kontaktelement zur Herausnahme freigibt.

Die Erfindung wird nachfolgend anhand der beigefügten Zeichnungen näher erläutert.

Es zeigen:
- Fig. 1:: perspektivische Ansicht des Dichtelements
- Fig. 2:: Stirnseitenansicht des Dichtelements in eingesetztem Zustand
- Fig. 3:: Längsseitenansicht des Dichtelements
- Fig. 4:: Querseitenansicht des Dichtelements
- Fig. 5:: Spritzgießwerkzeug mit Dichtelement

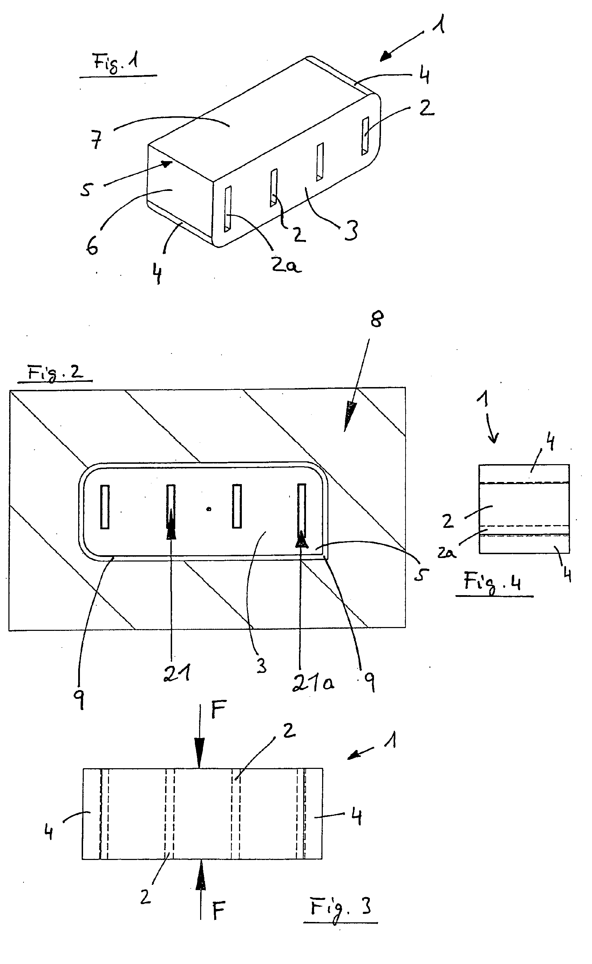

Figur 1 zeigt das erfindungsgemäße Dichtelement 1 für eine Spritzgießmaschine 10 zur Abdichtung zumindest eines nicht dargestellten elektrischen Kontaktelements 21, 21a eines Steckkontaktes beim partiellen Umspritzen mit einer leicht-fließenden, insbesondere einer duroplastischen Kunststoffformmasse in perspektivischer Darstellung. Das Dichtelement 1 ist aus einem Gusssililkon hergestellt, das temperaturbeständig ist und auch bei hohen Temperaturen ein hohes Rückstellvermögen und damit eine gute Dichtwirkung gewährleistet. Es kann durch verschiedene Härten, beispielsweise 55 Shore oder 80 Shore an die jeweiligen Erfordernisse angepasst werden.

Das Dichtelement 1 weist vier Schlitze in Gestalt länglicher Ausnehmungen 2, 2a auf, in die vier korrespondierende Kontaktelemente 21, 21 a eingeführt werden können. Die Kontaktelemente 21, 21 a sind in dieser Ausführungsvariante in Gestalt von Kontaktzungen ausgeführt, die von dem Dichtelement 1 umschlossen werden. Alternativ können jedoch auch andere Profile Verwendung finden, beispielsweise Kontaktstifte runden oder quadratischen Querschnitts, wobei in diesem Fall die Ausnehmungen 2, 2a des Dichtelements 1 entsprechend an diese Form angepasst sind, um eine optimale Dichtwirkung zu erreichen.

Soweit die Kontaktelemente in das Dichtelement 1 eingeführt werden, werden sie von diesem abgedichtet, so dass keine Kunststoffformmasse an diesen Teil gelangen kann. Dieser vom Dichtelement umschlossene Teil stellt den elektrischen Kontaktierbereich für den Steckkontakt des herzustellenden Kunststoffformteils dar.

Das Dichtelement 1 ist im Wesentlichen quaderförmig. Es weist drei abgerundete Seitenkanten 4 und eine Seitenkante 5 auf, an der die linke Querseitenfläche 6 und die obere Längsseitenfläche 7 im rechten Winkel aneinander stoßen. Hierdurch wird dem Dichtelement 1 für das Einsetzen in die Spritzgießmaschine 10 eine Vorzugsrichtung verliehen.

Figur 2 zeigt eine Ansicht des Dichtelements 1 im in die Spritzgießmaschine 10 eingesetzten Zustand mit Blick auf die Stirnseite 3. Kontaktelemente 21, 21a sind in das Dichtelement 1 formschlüssig eingeführt und werden umfangsmäßig von dem Dichtelement 1 vollständig umschlossen. Die aus dem Dichtelement 1 hervorstehenden Endbereiche der Kontaktelemente 21, 21a ragen in die Kavität hinein und werden dort von der Kunststoffformmasse umspritzt. Die Kontaktelemente 21, 21a bilden somit metallische Einlegeteile. Von der Spritzgießmaschine 10 ist lediglich ein Einsatz 8 eines ersten Werkzeugteils im Querschnitt dargestellt, welches einen hohlen Aufnahmeraum aufweist, in den das Dichtelement 1 in geringem Abstand 9 zur Hohlrauminnenwand eingesetzt ist. Alternativ kann der Aufnahmeraum auch an die Abmessungen des Dichtelements 1 angepasst sein, so dass das Dichtelement formschlüssig in dem Aufnahmeraum einliegt. Die Innenflächen des Aufnahmeraums bilden dann beim Einsetzen des Dichtelements 1 in den Aufnahmeraum Gleitflächen.

Das Dichtelement 1 wird von den Kontaktelementen 21, 21a gehalten. In Figur 2 ist ein Kontaktelement 21a dargestellt, welches breiter ausgebildet ist, als die übrigen Kontaktelemente 21. Diese Unsymmetrie in der Kontaktelementanordnung bedingt eine bestimmte Orientierung des Dichtelements 1 beim Einführen der Kontaktelemente 21, 21a in die Schlitze 2, 2a. Die korrekte Orientierung wird durch die Lage der nichtabgerundeten Seitenkante 5 vorgegeben.

Figur 3 zeigt eine Ansicht auf die obere Längsseitenfläche 7 des Dichtelements 1. Die gestrichelten Linien deuten die Ausnehmungen 2 im Dichtelement 1 an. Die durchgezogenen Linien zeigen die Kontur des Dichtelements, insbesondere im Bereich der abgerundeten Seitenkanten 4. Die Figur zeigt, dass sich die Ausnehmung 2, 2a entlang der gesamten Dicke des Dichtelements 1 in Einführrichtung der Kontaktelemente 21, 21a erstrecken. Die Dicke ist größer als die axiale Länge des Kontaktierbereichs der Kontaktelemente 21, 21a und beträgt ca. 9 Millimeter. Weiterhin beträgt die Breite des Dichtelements 1, d.h. seine Erstreckung in Querrichtung senkrecht zur Einführrichtung, ca. 8 Millimeter. Figur 3 zeigt weiterhin die in Richtung der Pfeile F auf das Dichtelement 1 ausgeübte Kraft zur derartigen elastischen Verformung, dass sich das Dichtelement 1 dichtend an die Kontaktelemente 21, 21 a anlegt. Die Richtung, in der die Kraft ausgeübt wird, entspricht dabei der Einführrichtung der Kontaktelemente 21, 21a in die Ausnehmungen 2, 2a.

Figur 4 zeigt eine Ansicht auf die in Figur 1 nicht sichtbare Querseitenfläche. Die gestrichelten Linien deuten auch hier die Ausnehmungen 2, 2a im Dichtelement 1 an. Die unterschiedlichen Breiten der Ausnehmungen 2 für die Kontaktelemente 21 und der Ausnehmung 2a für das Kontaktelement 21a sind erkennbar.

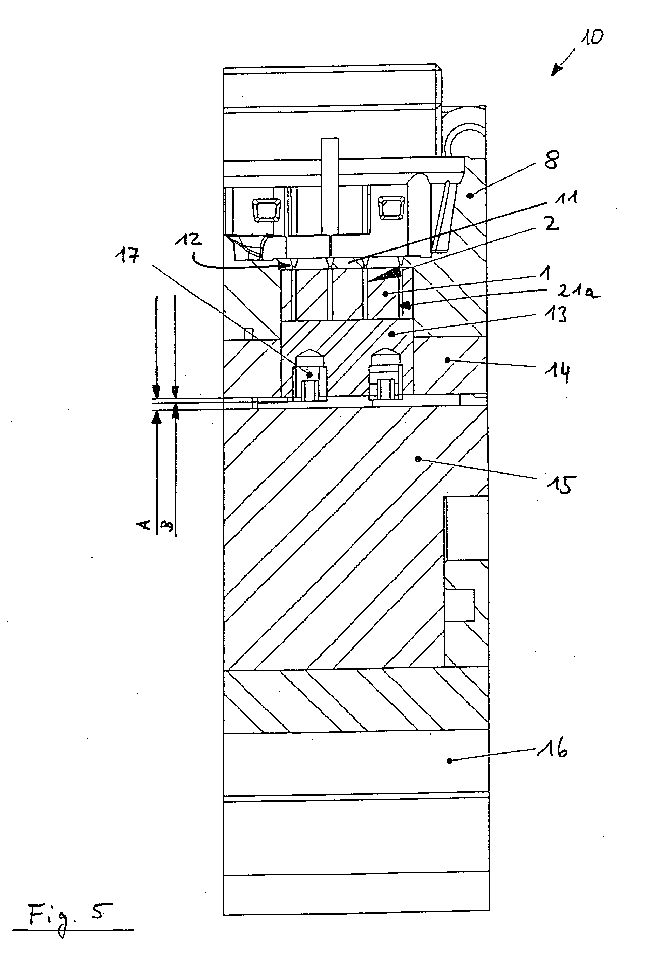

Figur 5 zeigt eine Spritzgießmaschine 10 zur Herstellung von Kunststoffformteilen mit vier von einer Kunststoffformmasse teilweise zu umspritzenden elektrischen Kontaktelementen 21, 21a eines Steckkontakts. Die Maschine umfasst einen Einsatz 8 eines ersten Werkzeugteils, der einen Hohlraum aufweist, in den das flexible Dichtelement 1 eingesetzt ist. Der Einsatz 8 weist eine Wand 11 auf, die den Hohlraum von einer Kavität trennt, in die die Kunststoffmasse einspritzbar ist. Die Kavität wird von dem ersten und einem zweiten Werkzeugteil gebildet. Die Wand 11 hat vier Öffnungen 12 zur Durchführung der elektrischen Kontaktelemente 21, 21a, die auf die Schlitze 2, 2a des Dichtelements 1 ausgerichtet sind. Weiterhin umfasst das erste Werkzeugteil ein Druckstück 13, das im eingesetzten Zustand des Dichtelements 1 an diesem anliegt. Das Druckstück 13 ist als Druckplatte ausgebildet, die an der der Kavität abgewandten Stirnseite 3 des Dichtelements 1 anliegt. Des Weiteren umfasst die Spritzgießmaschine 10 eine Zwischenplatte 15, eine Aufspannplatte 16 und eine Formplatte 14, wobei Letztere an dem Einsatz 8 anliegt und eine zum Hohlraum fluchtende Ausnehmung aufweist, in der die Druckplatte 13 eingesetzt ist.

In die Druckplatte 13 sind zwei Madenschrauben 17 eingebracht, mit denen der von der Druckplatte 13 auf das Dichtelement 1 ausgeübte Druck eingestellt werden kann. Hierzu sind in der Druckplatte 13 zwei Gewinde vorgesehen, in die die Madenschrauben 17 eingreifen und zur Kraftübertragung mechanisch mit dieser Verbunden sind. Die auf das Dichtelement 1 ausgeübte Druckkraft kann dadurch eingestellt werden, wie weit die Madenschrauben 17 aus der Druckplatte 13 herausragen, wobei die Druckplatte 13 im entspannten Zustand des Dichtelements 1 bündig mit der Formplatte 14 abschließt. Dabei sind in Figur 5 die Madenschrauben 17 so weit in die Druckplatte 13 eingeschraubt, dass sie noch ca. 0,8 Millimeter herausstehen, und damit von der der Kavität abgewandten Oberfläche der Formplatte 14 hervorstehen. Dieses Maß stellt eine Weglänge B dar, um die die Druckplatte 13 gegen das Dichtelement 1 bewegt wird. Als maximale Weglänge A können beispielsweise 2 Millimeter eingestellt werden, indem die Madenschrauben 17 weiter aus der Dichtplatte 13 herausgeschraubt werden. Die Zwischenplatte 15 liegt für den Betrieb der Maschine 10 bündig an der Formplatte 14, d.h. an der der Kavität abgewandten Formplattenoberfläche und an den Madenschrauben 17 an, d.h. drückt die Madenschrauben 17 samt Druckplatte 13 gegen das Dichtelement 1, welches wiederum gegen die Trennwand 11 gedrückt wird, die einen Gegendruck auf das Dichtelement 1 auswirkt. Druck und Gegendruck sind in Figur 3 mit den Pfeilen F dargestellt. Durch das Zusammendrücken wird das Dichtelement 1 in seiner Dicke um die Weglänge B verkürzt. Es kommt zu einer Verformung. Das verdrängte Volumen des Dichtelements 1 fließt in Freiräume und dichtet die in den Ausnehmungen 2, 2a befindlichen Kontaktelemente 21, 21a zur Kavität hin ab und gleicht Unregelmäßigkeiten an den Kontaktelementen 21, 21a aus. Der Abdichtvorgang erfolgt automatisch beim Schließen der Spritzgießmaschine 10, d.h., wenn sich die Zwischenplatte 15 an die Formplatte 17 anlegt. Über diesen speziellen einstellbaren Mechanismus kann die Dichtwirkung in intelligentem Zusammenspiel mit der Werkzeugschließbewegung bewirkt werden. Alternativ kann die Dichtwirkung aber auch unabhängig von der Schließbewegung ausgelöst werden, beispielsweise durch Kernzüge, Backenantriebe oder andere hydraulische oder pneumatische Schaltelemente.

Die folgenden Verfahrensschritte werden demgemäß für die Herstellung von Kunststoffformteilen mit den von einer Kunststoffformmasse teilweise zu umspritzenden elektrischen Kontaktelementen 21, 21a eines Steckkontakts bei der Verwendung der erfindungsgemäßen Maschine 10 ausgeübt:
- einmaliges Einsetzen des Dichtelements 1 in einen Hohlraum des Einsatzes 8,
- Einführen der Kontaktelemente 21, 21a in das Dichtelement 1 derart, dass sie umfangsmäßig von dem Dichtelement 1 vollständig umschlossen sind; es ragt lediglich derjenige Teil der Kontaktelemente 21, 21a in die Kavität hinein, der von der Kunststoffformmasse umspritzt werden soll,
- Schließen der Spritzgießwerkzeuge der Spritzgießmaschine 10 unter Ausbildung einer Kavität, wobei die Zwischenplatte 15 zur Anlage auf der Formplatte 14 gelangt, so dass eine Druckkraft auf die der Kavität abgewandten Stirnseite 3 des Dichtelements 1 derart ausgeübt wird, dass das Dichtelement 1 an die Kontaktelemente 21, 21a angepresst wird und die Kontaktelemente 21, 21a zur Kavität hin vollständig abgedichtet werden,
- Einspritzen der Kunststoffformmasse in die Kavität,
- Öffnen des Spritzgießwerkzeugs und
- Entformen des Kunststoffformteils mitsamt den umspritzten Kontaktelementen, 21, 21a.

Das Dichtelement 1 kann anschließend in der Spritzgießmaschine 10 für den nächsten Spritzgießvorgang verbleiben und somit wiederverwendet werden. Durch die Dichtwirkung des Dichtelements 1 verbleiben an den Kontaktelementen 21, 21a keine Freiräume, in die Kunststoffmasse fließen kann, so dass eine Gradbildung vermieden wird. Aufwändige Nachbearbeitungsschritte können dadurch eingespart werden.

## Patentansprüche

1. Dichtelement (1) für eine Spritzgießmaschine (10) zur Abdichtung zumindest eines elektrischen Kontaktelements (21, 21 a) eines Steckkontaktes beim teilweisen Umspritzen mit einer Kunststoffformmasse, das aus einem flexiblen Material gebildet ist und sich bei Einwirkung einer Druckkraft derart elastisch verformt, dass es sich dichtend an das Kontaktelement (21, 21 a) anlegt, **dadurch gekennzeichnet, dass** es einteilig ausgebildet ist und zumindest einen Schlitz (2, 2a) aufweist, in das das Kontaktelement (21, 21a) derart formschlüssig einführbar ist, dass es umfangsmäßig von dem Dichtelement (1) vollständig umschließbar ist.

2. Dichtelement (1) nach Anspruch 1, **dadurch gekennzeichnet, dass** der zumindest eine Schlitz (2, 2a) ein länglicher Einschnitt oder eine längliche Ausnehmung ist.

3. Dichtelement (1) nach Anspruch 2, **dadurch gekennzeichnet, dass** es aus einem spritzgießfähigen Elastomer, insbesondere einem Silikon, gebildet ist.

4. Dichtelement (1) nach Anspruch 1, 2 oder 3, **dadurch gekennzeichnet, dass** es im Querschnitt quaderförmig ausgebildet ist.

5. Dichtelement (1) nach einem der vorherigen Ansprüche, **dadurch gekennzeichnet, dass** sich der Schlitz (2, 2a) entlang der gesamten Dicke des Dichtelements (1) in Einführrichtung des Kontaktelements (21, 21a) erstreckt.

6. Dichtelement (1) nach einem der vorherigen Ansprüche, **dadurch gekennzeichnet, dass** es in Einführrichtung eine Dicke aufweist, die größer ist als die axiale Länge des Kontaktierbereichs des Kontaktelements (21, 21 a), vorzugsweise zwischen 8 und 20 Millimeter beträgt.

7. Dichtelement (1) nach einem der vorherigen Ansprüche, **dadurch gekennzeichnet, dass** es senkrecht zur Einführrichtung eine Breite zwischen 8 und 12 Millimeter aufweist.

8. Dichtelement (1) nach einem der vorherigen Ansprüche, **dadurch gekennzeichnet, dass** es zumindest eine zur Einführrichtung parallele Seitenkante (5) aufweist, die gegenüber den anderen Seitenkanten (4) anders geformt ist, wobei insbesondere eine oder drei der Seitenkanten (4, 5) abgerundet ist/ sind.

9. Dichtelement (1) nach einem der vorherigen Ansprüche, **dadurch gekennzeichnet, dass** es mehrere Schlitze (2, 2a) aufweist, die parallel zueinander ausgerichtet sind.

10. Spritzgießmaschine (10) zur Herstellung von Kunststoffformteilen mit zumindest einem von einer Kunststoffformmasse teilweise zu umspritzenden elektrischen Kontaktelement (21, 21 a) eines Steckkontakts, mit einem Einsatz (8) eines ersten Werkzeugteils, der einen Hohlraum aufweist, in den ein flexibles Dichtelement (1) nach einem der Ansprüche 1 bis 9 mit zumindest einem Schlitz (2, 2a) eingesetzt ist, wobei der Einsatz (8) eine Wand (11) aufweist, die den Hohlraum von einer Kavität trennt, in die die Kunststoffmasse einspritzbar ist, wobei die Wand (11) zumindest eine Öffnung (12) zur Durchführung des elektrischen Kontaktelementes (21, 21 a) aufweist, die auf den Schlitz (2, 2a) des Dichtelements (1) ausgerichtet ist, und mit einem Druckstück (13), das im eingesetzten Zustand des Dichtelements (1) an diesem anliegt, wobei das Spritzgießwerkzeug (10) zumindest während des Spritzgießbetriebs eine Druckkraft auf das Druckstück (13) ausübt.

11. Spritzgießwerkzeug (10) nach Anspruch 10, **dadurch gekennzeichnet, dass** das Druckstück (13) eine Druckplatte ist, die an der der Kavität abgewandten Stirnseite (3) des Dichtelements (1) anliegt.

12. Verfahren zur Herstellung eines Steckkontakts bei einem Kunststoffformteil durch teilweises Umspritzen zumindest eines elektrischen Kontaktelements (21, 21 a) mit einer Kunststoffformmasse, umfassend die Schritte
- Einsetzen eines flexiblen Dichtelements (1) nach einem der vorherigen Ansprüche 1 bis 9 mit zumindest einem Schlitz (2, 2a) in einen Hohlraum eines Einsatzes (8) einer Spritzgießmaschine (10) nach einem der Ansprüche 10 oder 11,
- Einführen des zumindest einen Kontaktelements (21, 21 a) in das Dichtelement (1) derart, dass es umfangsmäßig von dem Dichtelement (1) vollständig umschlossen ist,
- Schließen der Spritzgießwerkzeuge der Spritzgießmaschine (10) unter Ausbildung einer Kavität,
- Einspritzen der Kunststoffformmasse in die Kavität unter gleichzeitiger Ausübung einer Druckkraft auf das Dichtelement (13) derart, dass das Dichtelement (1) an das Kontaktelement (21, 21 a) angepresst wird und das Kontaktelement (21, 21 a) zur Kavität hin vollständig abdichtet,
- Öffnen der Spritzgießwerkzeuge,
- Entformen des Kunststoffformteils.

13. Verfahren nach Anspruch 12, **dadurch gekennzeichnet, dass** die Druckkraft auf der der Kavität abgewandten Stirnseite (3) des Dichtelements (1) ausgeübt wird.

14. Verfahren nach Anspruch 13, **dadurch gekennzeichnet, dass** die Druckkraft durch Andrücken einer Druckplatte (13) gegen die Stirnseite (3) des Dichtelements (1) ausgebübt wird.

15. Verfahren nach einem der Ansprüche 12 bis 14, **dadurch gekennzeichnet, dass** die Druckkraft durch die Schließbewegung des Spritzgießwerkszeugs aufgebracht wird.

## Claims

1. Sealing element (1) for an injection-moulding machine (10) for sealing at least one electrical contact element (21, 21a) of a plug-in contact during partial encapsulation with a plastics moulding compound that is formed from a flexible material and under the action of a compressive force is elastically deformed in such a way that it comes to lie against the contact element (21, 21a) with a sealing effect, **characterized in that** it is formed as a single part and has at least one slot (2, 2a), into which the contact element (21, 21a) can be inserted in a form-fitting manner in such a way that it can be completely enclosed circumferentially by the sealing element (1).

2. Sealing element (1) according to Claim 1, **characterized in that** the at least one slot (2, 2a) is a longitudinal incision or a longitudinal clearance.

3. Sealing element (1) according to Claim 2, **characterized in that** it is formed from an injection-mouldable elastomer, in particular a silicone.

4. Sealing element (1) according to Claim 1, 2 or 3, **characterized in that** it is formed cuboidally in cross section.

5. Sealing element (1) according to one of the preceding claims, **characterized in that** the slot (2, 2a) extends along the entire thickness of the sealing element (1) in the direction of insertion of the contact element (21, 21a).

6. Sealing element (1) according to one of the preceding claims, **characterized in that** it has in the direction of insertion a thickness that is greater than the axial length of the contacting region of the contact element (21, 21a), preferably is between 8 and 20 millimetres.

7. Sealing element (1) according to one of the preceding claims, **characterized in that** it has perpendicularly to the direction of insertion a width of between 8 and 12 millimetres.

8. Sealing element (1) according to one of the preceding claims, **characterized in that** it has at least one side edge (5) parallel to the direction of insertion that is formed differently from the other side edges (4), in particular one or three of the side edges (4, 5) being rounded.

9. Sealing element (1) according to one of the preceding claims, **characterized in that** it has a number of slots (2, 2a), which are aligned parallel to one another.

10. Injection-moulding machine (10) for producing plastic moulded parts with at least one electrical contact element (21, 21a) of a plug-in contact that is to be partially encapsulated by a plastics moulding compound, with an insert (8) of a first mould part, which has a hollow space in which a flexible sealing element (1) according to one of Claims 1 to 9 with at least one slot (2, 2a) is fitted, the insert (8) having a wall (11), which separates the hollow space from a cavity into which the plastics compound can be injected, the wall (11) having at least one opening (12), which is intended for leading through the electrical contact element (21, 21a) and is directed at the slot (2, 2a) of the sealing element (1), and with a pressure piece (13), which in the fitted state of the sealing element (1) lies against the latter, the injection mould (10) exerting a compressive force on the pressure piece (13) at least during the injection-moulding operation.

11. Injection mould (10) according to Claim 10, **characterized in that** the pressure piece (13) is a pressure plate, which lies against the end face (3) of the sealing element (1) that is facing away from the cavity.

12. Method for producing a plug-in contact for a plastic moulded part by partial encapsulation of at least one electrical contact element (21, 21a) with a plastics moulding compound, comprising the steps of
- fitting a flexible sealing element (1) according to one of the preceding Claims 1 to 9 with at least one slot (2, 2a) into a hollow space of an insert (8) of an injection-moulding machine (10) according to either of Claims 10 and 11,
- inserting the at least one contact element (21, 21a) into the sealing element (1) in such a way that it is completely enclosed circumferentially by the sealing element (1),
- closing the injection moulds of the injection-moulding machine (10) to form a cavity,
- injecting the plastics moulding compound into the cavity while at the same time exerting a compressive force on the sealing element (13) in such a way that the sealing element (1) is pressed against the contact element (21, 21a) and completely seals the contact element (21, 21a) with respect to the cavity,
- opening the injection moulds,
- demoulding the plastic moulded part.

13. Method according to Claim 12, **characterized in that** the compressive force is exerted on the end face (3) of the sealing element (1) that is facing away from the cavity.

14. Method according to Claim 13, **characterized in that** the compressive force is exerted by pressing a pressure plate (13) against the end face (3) of the sealing element (1).

15. Method according to one of Claims 12 to 14, **characterized in that** the compressive force is applied by the closing movement of the injection mould.

## Revendications

1. Elément d'étanchéité (1) pour une machine de moulage par injection (10) destiné à étanchéifier au moins un élément de contact électrique (21, 21a) d'un contact à fiche lors de l'enrobage partiel avec une masse de moulage en matière plastique, qui est formé d'un matériau flexible et qui se déforme élastiquement lors de l'action d'une force de compression, de telle manière qu'il s'applique de façon étanche sur l'élément de contact (21, 21a), **caractérisé en ce qu'**il est réalisé en une seule pièce et présente au moins une fente (2, 2a), dans laquelle l'élément de contact (21, 21a) peut être inséré par emboîtement, de telle manière qu'il puisse être entouré entièrement en périphérie par l'élément d'étanchéité (1).

2. Elément d'étanchéité (1) selon la revendication 1, **caractérisé en ce que** ladite au moins une fente (2, 2a) est une incision allongée ou un évidement allongé.

3. Elément d'étanchéité (1) selon la revendication 2, **caractérisé en ce qu'**il est formé en un élastomère pouvant être moulé par injection, en particulier une silicone.

4. Elément d'étanchéité (1) selon la revendication 1, 2 ou 3, **caractérisé en ce qu'**il présente une forme de parallélépipède en section transversale.

5. Elément d'étanchéité (1) selon l'une quelconque des revendications précédentes, **caractérisé en ce que** la fente (2, 2a) s'étend le long de toute l'épaisseur de l'élément d'étanchéité (1) dans la direction d'introduction de l'élément de contact (21, 21a).

6. Elément d'étanchéité (1) selon l'une quelconque des revendications précédentes, **caractérisé en ce qu'**il présente dans la direction d'introduction une épaisseur qui est plus grande que la longueur axiale de la région de contact de l'élément de contact (21, 21a), et vaut de préférence entre 8 et 20 millimètres.

7. Elément d'étanchéité (1) selon l'une quelconque des revendications précédentes, **caractérisé en ce qu'**il présente perpendiculairement à la direction d'introduction une largeur comprise entre 8 et 12 millimètres.

8. Elément d'étanchéité (1) selon l'une quelconque des revendications précédentes, **caractérisé en ce qu'**il présente au moins un bord latéral (5) parallèle à la direction d'introduction, qui est d'une forme différente des autres bords latéraux (4), dans lequel en particulier un ou trois des bords latéraux (4, 5) est/sont arrondi(s).

9. Elément d'étanchéité (1) selon l'une quelconque des revendications précédentes, **caractérisé en ce qu'**il présente plusieurs fentes (2, 2a), qui sont orientées parallèlement l'une à l'autre.

10. Machine de moulage par injection (10) pour la fabrication de pièces moulées en matière plastique avec au moins un élément de contact électrique (21, 21a) d'un contact à fiche à enrober partiellement avec une masse de moulage en matière plastique, avec un insert (8) d'une première partie d'outil, qui présente un espace creux dans lequel un élément d'étanchéité flexible (1) selon l'une quelconque des revendications 1 à 9 avec au moins une fente (2, 2a) est introduit, dans lequel l'insert (8) présente une paroi (11), qui sépare l'espace creux d'une cavité dans laquelle la masse de matière plastique peut être injectée, dans lequel la paroi (11) présente au moins une ouverture (12) destinée au passage de l'élément de contact électrique (21, 21a), qui est alignée sur la fente (2, 2a) de l'élément d'étanchéité (1), et avec une pièce de pression (13), qui dans l'état introduit de l'élément d'étanchéité (1) s'applique sur celui-ci, dans lequel l'outil de moulage par injection (10) exerce une force de compression sur la pièce de pression (13) au moins pendant l'opération de moulage par injection.

11. Dispositif d'étanchéité (10) selon la revendication 10, **caractérisé en ce que** la pièce de pression (13) est une plaque de pression, qui s'applique sur le côté frontal (3) de l'élément d'étanchéité (1) détourné de la cavité.

12. Procédé de fabrication d'un contact à fiche dans une pièce moulée en matière plastique par enrobage partiel d'au moins un élément de contact électrique (21, 21a) avec une masse de moulage en matière plastique, comprenant les étapes suivantes:
- insérer un élément d'étanchéité flexible (1) selon l'une quelconque des revendications précédentes 1 à 9 avec au moins une fente (2, 2a) dans un espace creux d'un insert (8) d'une machine de moulage par injection (10) selon l'une des revendications 10 ou 11,
- introduire ledit au moins un élément de contact (21, 21a) dans l'élément d'étanchéité (1), de telle manière qu'il soit entouré entièrement en périphérie par l'élément d'étanchéité (1),
- fermer les outils de moulage par injection de la machine de moulage par injection (10) en formant une cavité,
- injecter la masse de moulage en matière plastique dans la cavité en exerçant simultanément une force de compression sur l'élément d'étanchéité (13), de telle manière que l'élément d'étanchéité (1) soit pressé sur l'élément de contact (21, 21a) et étanchéifie entièrement l'élément de contact (21, 21a) par rapport à la cavité,
- ouvrir les outils de moulage par injection,
- démouler la pièce moulée en matière plastique.

13. Procédé selon la revendication 12, **caractérisé en ce que** l'on exerce la force de compression sur le côté frontal (3) de l'élément d'étanchéité (1) détourné de la cavité.

14. Procédé selon la revendication 13, **caractérisé en ce que** l'on- exerce la force de compression par pressage d'une plaque de pression (13) contre le côté frontal (3) de l'élément d'étanchéité (1).

15. Procédé selon l'une quelconque des revendications 12 à 14, **caractérisé en ce que** l'on applique la force de compression par le mouvement de fermeture de l'outil de moulage par injection.
